Europäisches Patentamt

European Patent Office

Office européen des brevets

(11) Veröffentlichungsnummer: **0 279 934 B1**

(12) # EUROPÄISCHE PATENTSCHRIFT

(45) Veröffentlichungstag der Patentschrift:
05.09.90

(51) Int. Cl.⁵: **F16H 7/18**, F01L 1/02

(21) Anmeldenummer: **87118471.9**

(22) Anmeldetag: **14.12.87**

(54) Gleitschiene.

(30) Priorität: **26.02.87 DE 3706136**

(43) Veröffentlichungstag der Anmeldung:
**31.08.88 Patentblatt 88/35**

(45) Bekanntmachung des Hinweises auf die Patenterteilung:
**05.09.90 Patentblatt 90/36**

(84) Benannte Vertragsstaaten:
**DE ES FR GB IT NL SE**

(56) Entgegenhaltungen:
**DE-A- 1 750 684
DE-A- 1 750 685
DE-A- 3 049 106
DE-A- 3 506 010
DE-A- 3 525 746
DE-C- 3 417 100
FR-A- 1 408 575**

(73) Patentinhaber: **Dr.Ing.h.c. F. Porsche Aktiengesellschaft, Porschestrasse 42, D-7000 Stuttgart 40(DE)**

(72) Erfinder: **Gröger, Klaus, Saarstrasse 26, D-7251 Hemmingen(DE)**
Erfinder: **Diehm, Volker, Dipl.-Ing., Im Eselsberg 1, D-7103 Schwaigern(DE)**
Erfinder: **Binder, Robert, Beethovenstrasse 19, D-7141 Schwieberdingen(DE)**
Erfinder: **Mittermeier, Walter, Dipl.-Ing., Goethestrasse 28, D-7146 Tamm(DE)**

ACTORUM AG

## Beschreibung

Die Erfindung betrifft eine Gleitschiene nach dem Oberbegriff des Patentanspruchs 1.

In der FR-A 1 408 575 wird eine Ketten-Gleitschiene beschrieben, die aus Kunststoff besteht und im Querschnitt T-förmig ausgebildet ist.

Aus der gattungsgemäßen DE-A 3 049 106 geht eine Spannschiene für Kettentriebe hervor, die einen aus Blech gefertigten Träger und einen diesen umgebenden, aus Kunststoff bestehenden Gleitbelagkörper umfasst. Der Träger und der Gleitbelagkörper sind unabhängig voneinander hergestellte Bauteile und wirken über Rasteinrichtungen zusammeñ.

Schließlich zeigt die DE-PS 34 17 100 eine Gleitschiene mit einem hohlen, eine Kette allseitig umgebenden Kanalgehäuse. Auch diese Gleitschiene besteht aus Kunststoff.

Aufgabe der Erfindung ist es, eine Gleitschiene zum Führen und/oder Spannen von Ketten zu schaffen, die bei relativ geringem Gewicht hoch beanspruchbar ist und sich kostengünstig herstellen lässt.

Erfindungsgemäß wird diese Aufgabe durch die kennzeichnenden Merkmale des Anspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß die Gleitschiene leichtgewichtig ist und dabei den von der Kette verursachten Beanspruchungen dauerhaft standhält. Hinzu kommt, daß die Herstellungsart der Gleitschiene aufgrund des gestuften Fertigungsablaufs - auf Bearbeitungsverfahren kann im wesentlichen verzichtet werden - wirtschaftlich ist; auch lassen sich mit ihr überdurchschnittliche Qualitätsanforderungen erfüllen.

In der Zeichnung werden Ausführungsbeispiele der Erfindung gezeigt, die nachstehend näher beschrieben sind. Es zeigt

Fig. 1 eine Seitenansicht einer Gleitschiene,
Fig. 2 einen Schnitt nach der Linie II-II der Fig. 1 in größerem Maßstab,
Fig. 3 einen Schnitt nach der Linie III-III der Fig. 1 in größerem Maßstab,
Fig. 4 eine Einzelheit X der Fig. 1 in größerem Maßstab,
Fig. 5 eine Ansicht entsprechend Fig. 4 einer weiteren Ausführungsform,
Fig. 6 einen Schnitt nach der Linie VI-VI der Fig. 5,
Fig. 7 eine Ansicht entsprechend Fig. 1 einer anderen Ausführungsform,
Fig. 8 einen Schnitt nach der Linie VIII-VIII der Fig. 7 in größerem Maßstab,
Fig. 9 eine Ansicht entsprechend Fig. 1 einer anderen Ausführungsform,
Fig. 10 einen Schnitt nach der Linie X-X der Fig. 9 in größerem Maßstab.

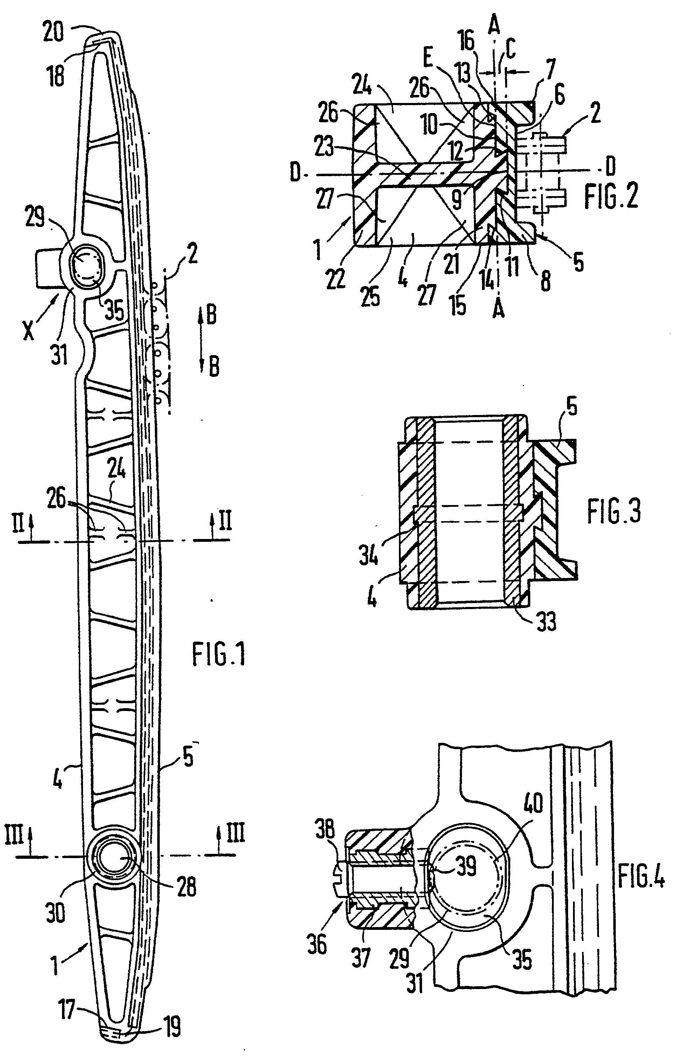

In Fig. 1 ist eine Gleitschiene 1 dargestellt, die zur Führung einer Kette 2 dient. Sie ist beispielsweise ein Endlosglied eines Kettentriebs. Letzterer kann Bestandteil einer nicht gezeigten Brennkraftmaschine sein und bei dieser zwischen Kurbelwelle und Steuerwelle, auch Nockenwelle genannt, wirksam sein.

Die Gleitschiene 1 wird gebildet durch einen Träger 4 und einen Gleitbelagkörper 5, an dem die Kette 2 entlanggleitet.

Träger 4 und Gleitbelagkörper 5 bestehen aus Kunststoff unterschiedlicher Spezifikation, vorzugsweise Polyamid, wobei für den Träger 4 Polyamid mit Glasfaserzusätzen verwendet wird; für den Gleitbelagkörper 5 verschleißfestes Polyamid ohne Glasfaserzusätze.

Der Gleitbelagkörper 5 weist eine Gleitfläche 6 für die Kette 3 auf, die von Schultern 7, 8 begrenzt ist, derart, daß er einen U-förmigen Umriß aufweist.

Der Träger 4 und der Gleitbelagkörper 5 sind in einer Ebene A-A zusammengesetzt. Zwischen diesen, eine Einheit bildenden Bauteilen sind ineinandergreifende und sich gegenseitig hintergreifende Vorrichtungen vorgesehen, die im Ausführungsbeispiel gemäß Fig. 2 durch zwei Schwalbenschwanzverbindungen 9, 10 gebildet werden; sie erstrecken sich in Kettenlaufrichtung B-B (Fig. 1).

Die Schwalbenschwanzverbindungen 9, 10 sind im Querschnitt gesehen lagemäßig versetzt - Abstand C - zueinander angeordnet und weisen hintergreifende Profilierungen 11, 12 und 13, 14 auf. Die Profilierungen 11, 12 der Schwalbenschwanzverbindung 9 sind benachbart einer Mittellängsebene D-D der Gleitschiene 1 angeordnet; die Profilierungen 13, 14 der Schwalbenschwanzverbindung 10 benachbart von Randzonen 15, 16 der Gleitschiene 1.

Der Träger 4 besitzt Endbereiche 17, 18 (Fig. 1), die gegenüber der Kettenlaufrichtung B-B abgewinkelt sind. Um die Endbereiche 17, 18 herumgezogen sind Abwinkelungen 19, 20 des Gleitbelagkörpers 5. Auch zwischen diesen Endbereichen 17, 18 und den Abwinkelungen 19, 20 sind Schwalbenschwanzverbindungen entsprechend der Fig.2 vorgesehen.

Der Träger 4 weist im Querschnitt gesehen - (Fig. 2) - beabstandete Querflansche 21, 22 auf, wobei diese mit einem Steg 23 verbunden sind, der sich in einer Mitellängsebene D-D der Gleitschiene 1 erstreckt. Diese Ausbildung verleiht dem Träger 4, eine Doppel-T-förmige Gestalt.

Seitlich des Stegs 23 sind mehrere im Abstand zueinander angeordnete Querrippen 24, 25 vorgesehen, die zwischen den Querflanschen 21, 22 verlaufen und senkrecht und/oder in geneigtem Winkel zur Kettenlaufrichtung B-B ausgerichtet sind. Zusätzlich können die Querflansche 21, 22 noch mit Knotenelementen 26, 27 gegenüber dem Steg 23 abgestützt sein. Besagte Elemente erstrecken sich ebenfalls quer zur Kettenlaufrichtung.

Die Halterung der Gleitschiene 1 erfolgt an Lagerbolzen 28, 29 der Brennkraftmaschine, die Lageraugen 30, 31 aufnehmen. In das Lagerauge 30 ist eine metallische Büchse 33 eingesetzt (Fig. 3), die mittels eines Bundes 34 am Träger 4 gesichert ist. Das Lagerauge 31 ist mit einer Art Schlitzbohrung 35 versehen, wodurch Wärmedehnungen der Gleitschiene 1 namentlich zwischen Lagerbolzen 28, 29 ausgeglichen werden.

Zwischen Gleitschiene 1 und Lagerbolzen 29 ist eine Festsetzeinrichtung 36 vorgesehen (Fig. 4). Diese wird gebildet durch eine metallische Gewindebüchse 37 und einen darin ruhenden Gewindebolzen 38, der mit einem Kugelabschnitt 39 in einen rinnenartige Ausnehmung 40 des Lagerbolzens 29 eingreift, wodurch die Gleitschiene 1 axial gesichert ist.

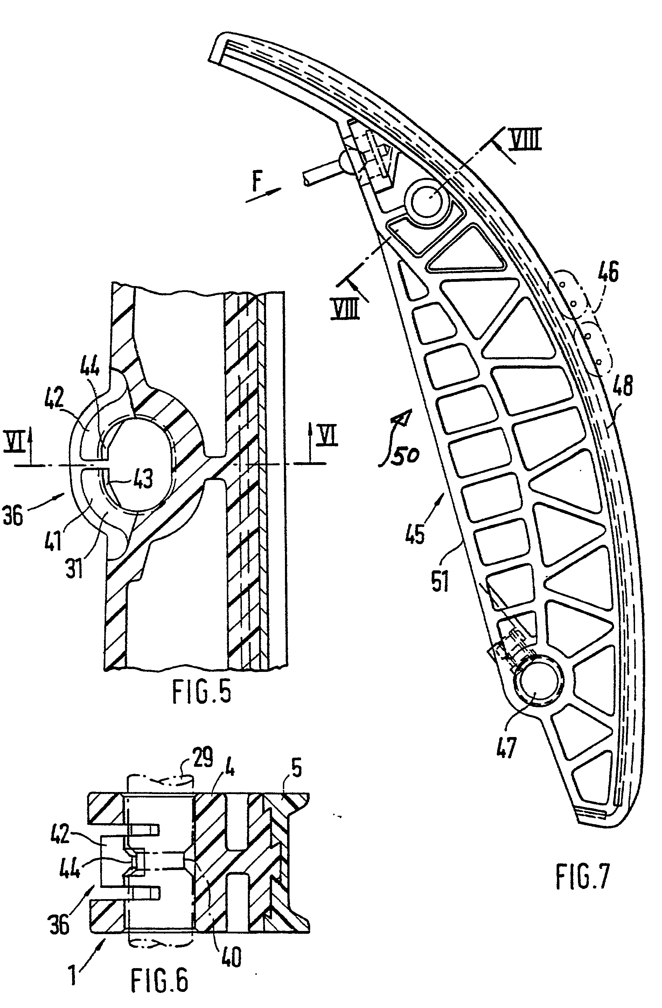

Gemäß den Fig. 5 und 6 wird die Festsetzeinrichtung 36 durch federnde Spannelemente 41, 42 gebildet, die aus einem Stück mit dem Träger 4 hergestellt sind. Die Spannelemente 41, 42 ragen mit Nasen 43, 44 in die Ausnehmung 38 des Lagerbolzens 29 hinein.

Die Gleitschiene 1 wird wie folgt hergestellt: zunächst wird der Träger 4 im Spritzgußverfahren gefertigt, und zwar mit der ihm zugehörigen Schwalbenschwanzprofilierung entlang Linie E (Fig. 2). Danach wird der Träger 4 als Basiskörper verwendet und der Gleitbelagkörper 5 im Spritzgußverfahren mit besagtem Träger 4 vereinigt.

In Fig. 7 ist eine Gleitschiene 45 zum Spannen einer Kette 46 dargestellt. Hierzu ist sie bei 47 schwenkbar gelagert und wird mittels einer nicht näher gezeigten, in Richtung F wirkenden Vorrichtung gespannt. Die Kettenlauffläche 48 des Gleitbelagkörpers 49 besitzt einen bogenförmigen Verlauf, wogegen der Träger 50 sich mit seiner der Kettenlauffläche 48 abgekehrten Seite 51 nach Art einer Bogenabschnittslinie hierzu erstreckt. Der Träger 50 weist zwischen den beabstandeten Querflanschen 52, 53 noch einen weiteren Querflansch 54 auf, wobei alle Querflansche mit dem in der Mittellängsebene D-D verlaufenden Steg 55 verbunden sind. Die Querflansche 53 und 54 sind in diesem Ausführungsbeispiel im Querschnitt gesehen breiter als der Gleitbelagkörper 49, wodurch eine zusätzliche Steifigkeit der Gleitschiene 45 erzielt wird. Ansonsten entspricht die Gleitschiene 45 der Bauweise der Gleitschiene 1.

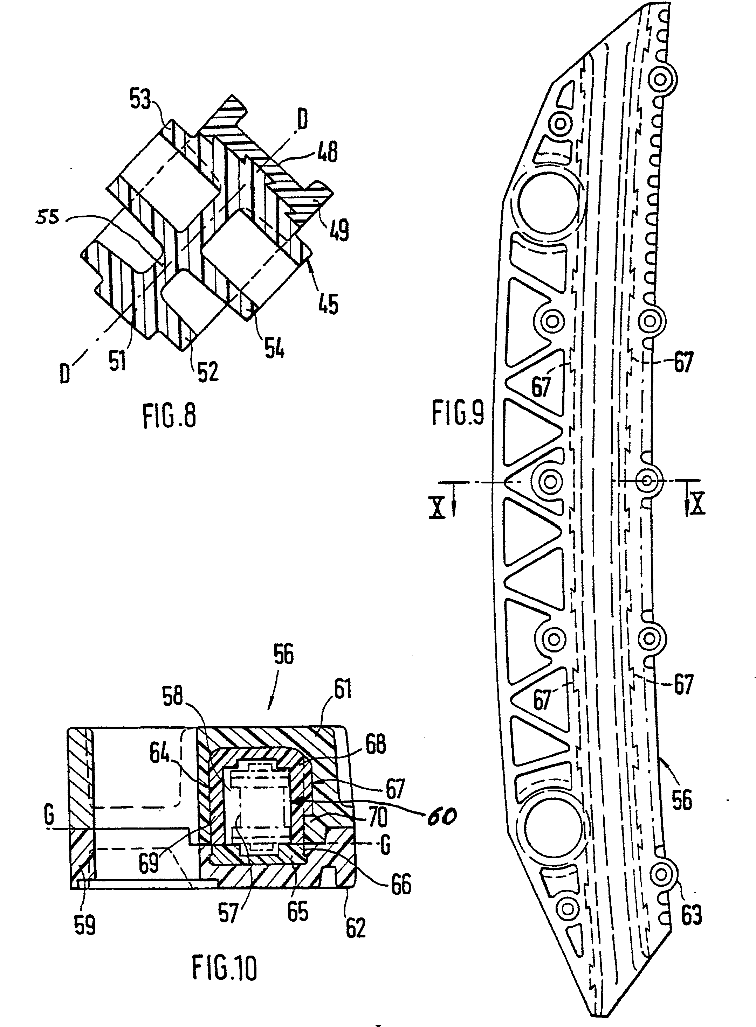

Nach den Fig. 9 und 10 ist die Gleitschiene 56 mit einem die Kette 57 allseitig umschließenden Kanal 58 versehen, wobei der Träger 59 und der Gleitbelagkörper 60 aus einem Aufnahmeteil 61 und einem Schließteil 62 bestehen. Beide sind in einer Längsmittelebene G-G zusammengesetzt und mittels bei 63 vorgesehener Schrauben befestigt, wobei das Aufnahmeteil 61 mit einem U-förmigen, die Kette 57 an drei Seiten umgebenden ersten Belagkörperteil 64 und das Schließteil 62 mit einem zweiten Belagkörperteil 65 versehen ist. Letzteres wird mittels einer Schulter 66 im Schließteil 62 gehalten.

Zwischen dem ersten Belagkörperteil 64 und dem Aufnahmeteil 61 sind mehrere Schwalbenschwanzverbindungen 67 vorgesehen (Fig. 9), die in etwa gleichmäßig über die Länge der Gleitschiene 56 verteilt vorgesehen sind und sich quer zu einer Kettenlängsrichtung erstrecken. Dabei sind die Schwalbenschwanzverbindungen 67 an beiden Schenkeln 68, 69 des Belagkörperteils 64 angebracht. Außerdem sind die Schwalbenschwanzverbindungen 67 kürzer als der Schenkel 68, d.h. sie erstreckt sich nur über einen Teilbereich des Belagkörperteils 64, so daß letzteres auch in Kettenquerrichtung mittels einer Schulter 70 festgelegt ist.

Bei dieser Gleitschiene werden zunächst die Belagkörperteile 64 und 65 des Gleitbelagkörpers 60 in getrennten Zyklen, und zwar im Spritzgußverfahren, hergestellt. Danach werden das Aufnahmeteil 61 und das Schließteil 62 des Trägers 59 durch Spritzgießen mit den Belagkörperteilen 64 und 65 vereinigt.

**Patentansprüche**

1. Gleitschiene zum Führen und/oder Spannen von Ketten, vorzugsweise für einen Steuerwellenantrieb einer Brennkraftmaschine, wobei die Gleitschiene durch einen Träger und einen mit diesem verbundenen, aus Kunststoff bestehenden Gleitbelagkörper gebildet wird, dadurch gekennzeichnet, daß der Träger (4; 50; 59) und der Gleitbelagkörper (5; 49; 60) aus Kunststoff unterschiedlicher Spezifikation bestehen und in Stufenfertigungsgängen hergestellt und über eine oder mehrere ineinandergreifende, sich gegenseitig hintergreifende Vorrichtungen zu einem nunmehr einstückigen Bauteil miteinander verbunden sind.

2. Gleitschiene nach Anspruch 1, dadurch gekennzeichnet, daß die Vorrichtungen Schwalbenschwanzverbindungen (9, 10, 67) sind.

3. Gleitschiene nach den Ansprüchen 1 und 2, dadurch gekennzeichnet, daß zwischen Gleitbelagkörper (5, 49) und Träger (4, 50) zwei sich in Kettenlaufrichtung (B-B) erstreckende Schwalbenschwanzverbindungen vorgesehen sind.

4. Gleitschiene nach den Ansprüchen 2 und 3, dadurch gekennzeichnet, daß der Träger wenigstens einen zur Kettenlaufrichtung (B-B) abgewinkelten Endbereich (17 oder 18) aufweist, um den der Gleitbelagkörper mit Abwinkelungen (19, 20) herumgezogen ist, wobei zwischen Gleitkörper und Endbereich (17 oder 18) die Schwalbenschwanzverbindungen (9, 10) vorgesehen sind.

5. Gleitschiene nach Anspruch 1, dadurch gekennzeichnet, daß der Träger (4, 50) im Querschnitt gesehen beabstandete Querflansche (21, 22; 52, 53, 54) aufweist, zwischen denen sich ein Steg (23, 55) erstreckt.

6. Gleitschiene nach Anspruch 5, dadurch gekennzeichnet, daß der Steg (23, 55) in einer Mittellängsebene (D-D) der Gleitschiene angeordnet ist.

7. Gleitschiene nach den Ansprüchen 5 und 6, dadurch gekennzeichnet, daß seitlich des Steges (23, 55) Querrippen (24, 25) vorgesehen sind, die sich zwischen den Querflanschen (21, 22) erstrecken.

8. Gleitschiene nach Anspruch 5, dadurch gekennzeichnet, daß zwischen den Querflanschen (52, 53) ein weiterer Querflansch (54) verläuft.

9. Gleitschiene nach den Ansprüchen 5, 6 und 8, dadurch gekennzeichnet, daß die Querflansche (21, 22) örtlich mit Knotenelementen (26, 27) gegenüber dem Steg (23) abgestützt sind.

10. Gleitschiene, die einen die Ketten an mehreren Seiten umgebenden Kanal umfasst, nach den Ansprüchen 1 und 2, dadurch gekennzeichnet, daß der Gleitbelagkörper (60) in den Träger (59) eingebettet ist, wobei sich die Schwalbenschwanzverbindungen (67) zwischen Träger (59) und Gleitbelagkörper (60) quer zu einer Kettenlängsrichtung erstrecken.

11. Gleitschiene nach Anspruch 10, dadurch gekennzeichnet, daß die Schwalbenschwanzverbindungen (67) an gegenüberliegenden Schenkeln (68, 69) des Gleitbelagkörpers (60) und des Trägers (59) angebracht sind.

12. Gleitschiene nach den Ansprüchen 10 und 11, dadurch gekennzeichnet, daß sich die Schwalbenschwanzverbindungen (67) nur über einen Teilbereich der Schenkel (68, 69) des Gleitbelagkörpers (60) erstrecken.

13. Gleitschiene nach Anspruch 1 mit Lageraugen, die mit Lagerbolzen der Brennkraftmaschine zusammenwirken, dadurch gekennzeichnet, daß die Lageraugen (30, 31) am Träger (4) angeordnet und mit Festsetzeinrichtungen (36) versehen sind, die in eine Ausnehmung (40) der Lagerbolzen (29) eingreifen.

14. Gleitschiene nach Anspruch 13, dadurch gekennzeichnet, daß jede Festsetzeinrichtung (36) federnde, in radialer Richtung des jeweiligen Lagerbolzens (29) wirkende federnde Spannelemente (41, 42) umfasst, die aus einem Stück mit dem Träger (4) hergestellt sind.

15. Gleitschiene nach Anspruch 13, dadurch gekennzeichnet, daß die Festsetzeinrichtungen (36) Gewindebolzen (38) sind, die in radialer Richtung der Lagerbolzen (29) wirken und mittels eines Kugelabschnitts (39) in deren Ausnehmung (40) eingreifen.

16. Gleitschiene nach Anspruch 3, dadurch gekennzeichnet, daß im Querschnitt der Gleitschiene (1, 42) gesehen, hintergreifende Profilierungen (11, 12) der ersten Schwalbenschwanzführung (9) benachbart einer Mittellängsebene (D-D) und Profilierungen (13, 14) der zweiten Schwalbenschwanzverbindung (10) benachbart von Randzonen (15, 16) verlaufen.

17. Gleitschiene nach Anspruch 3, dadurch gekennzeichnet, daß im Querschnitt der Gleitschiene (1, 45) gesehen die Schwalbenschwanzverbindungen (11, 12 und 13, 14) lagemäßig versetzt (Abstand C) zueinander angeordnet sind.

18. Gleitschiene nach den Ansprüchen 10 und 11, dadurch gekennzeichnet, daß die Schwalbenschwanzverbindungen (67) in etwa gleichmäßig über die Länge der Gleitschiene (56) verteilt angeordnet sind.

19. Verfahren zur Herstellung der Gleitschiene nach Anspruch 1, dadurch gekennzeichnet, daß der Träger (4) zunächst im Spritzgußverfahren hergestellt und der Gleitbelagkörper (5) danach ebenfalls im Spritzgußverfahren mit dem Träger (4) zur Bildung der gesamten Gleitschiene (1) vereinigt wird.

20. Verfahren zur Herstellung der Gleitschiene nach Anspruch 10, dadurch gekennzeichnet, daß die Belagkörperteile (64, 65) zunächst im Spritzgußverfahren hergestellt und danach - ebenfalls im Spritzgußverfahren - mit den den Träger (59) bildenden Teilen vereinigt wird.

**Claims**

1. A sliding rail for guiding and/or tensioning chains, preferably for a camshaft drive of an internal combustion engine, the sliding rail being formed by a support and a sliding cover member joined thereto and consisting of plastics material, characterized in that the support (4; 50; 59) and the sliding cover member (5; 49; 60) consist of plastics material of different specification and, produced in staged manufacturing procedures, are joined to each other to form a now integral component by way of one or more interlocking devices mutually engaging one behind one another.

2. A sliding rail according to Claim 1, characterized in that the devices are dovetailed connexions (9, 10; 67).

3. A sliding rail according to Claims 1 and 2, characterized in that two dovetailed connexions extending in the travelling direction (B-B) of the chain are provided the sliding cover member (5; 49) and the support (4; 50).

4. A sliding rail according to Claims 2 and 3, characterized in that the support comprises at least one end region (17 or 18), which is angled towards the travelling direction (B-B) of the chain and around which the sliding cover member is pulled by angled portions (19, 20), the dovetailed connexions (9, 10) being provided between the sliding rail and the end region (17 or 18).

5. A sliding rail according to Claim 1, characterized in that the support (4; 50) comprises transverse flanges (21, 22; 52, 53, 54) which are spaced, as viewed in cross-section, and between which a web (23; 55) extends.

6. A sliding rail according to Claim 5, characterized in that the web (23; 55) is situated in a median longitudinal plane (D-D) of the sliding rail.

7. A sliding rail according to Claims 5 and 6, characterized in that transverse ribs (24, 25) extending between the transverse flanges (21, 22) are provided laterally of the web (23; 55).

8. A sliding rail according to Claim 5, characterized in that a further transverse flange (54) extends between the transverse flanges (52, 53).

9. A sliding according to Claims 5, 6 and 8, characterized in that the transverse flanges (21, 22) are supported locally by junction elements (26, 27) with respect to the web (23).

10. A sliding rail, comprising a channel surrounding the chains on a plurality of sides, according to Claims 1 and 2, characterized in that the sliding cover member (60) is embedded in the support (59), the dovetailed connexions (67) extending between the support (59) and the sliding cover member (60) transversely to a longitudinal direction of the chain.

11. A sliding rail according to Claim 10, characterized in that the dovetailed connexions (67) are attached to opposite arms (68, 69) of the sliding cover member (60) and the support (59).

12. A sliding rail according to Claims 10 and 11, characterized in that the dovetailed connexions (67) extend only over a partial area of the arms (68, 69) of the sliding cover member (60).

13. A sliding rail according to Claim 1, with bearing lugs cooperating with bearing journals of the internal combustion engine, characterized in that the bearing lugs (30, 31) are mounted on the support (4) and are provided with fastening devices (36) engaging in a recess (40) in the bearing journals (29).

14. A sliding rail according to Claim 13, characterized in that each fastening device (36) comprises resilient clamping elements (41, 42) which act in the radial direction of the respective bearing journal (29) and are resilient and which are produced integrally with the support (4).

15. A sliding rail according to Claim 13, characterized in that each fastening device (36) are threaded pins (38) acting in the radial direction of the bearing journals (29) and engaging by means of a spherical portion (39) in the recess (40) thereof.

16. A sliding rail according to Claim 3, characterized in that sections (11, 12) engaging behind as viewed in the cross-section of the sliding rail (1, 42) – of the first dovetailed connexion (9) extend adjacent to a median longitudinal plane (D–D) and sections (13, 14) of the second dovetailed connexion (10) extend adjacent to edge areas (15, 16).

17. A sliding rail according to Claim 3, characterized in that, as viewed in the cross-section of the sliding rail (1, 45), the dovetailed connexions (11, 12 and 13, 14) are arranged offset in their position from one another (distance C).

18. A sliding rail according to Claims 10 and 11, characterized in that the dovetailed connexions (67) are arranged distributed approximately uniformly over the length of the sliding rail (56).

19. A method of producing the sliding rail according to Claim 1, characterized in that the support (4) is first produced during injection-moulding and the sliding cover member (5) is then joined to the support (4) likewise in the injection-moulding process to form the entire sliding rail (1).

20. A method of producing the sliding rail according to Claim 10, characterized in that the cover member parts (64, 65) are first produced in the injection-moulding process and [are] then joined – likewise during injection-moulding – to the parts forming the support (59).

**Revendications**

1. Rail de glissement pour le guidage et/ou la tension de chaînes, de préférence pour un entraînement d'arbre de commande d'un moteur à combustion interne, le rail de glissement étant formé par un support et un corps de revêtement de glissement en matière plastique, relié à celui-ci, caractérisé en ce que le support (4; 50; 59) et le corps de revêtement de glissement (5; 49; 60) sont en une matière plastique aux caractéristiques différentes et fabriqués en plusieurs étapes de fabrication, et assemblés entre eux, par un ou plusieurs dispositifs s'engageant l'un dans l'autre, passant réciproquement l'un derrière l'autre, pour donner un composant d'une seule pièce.

2. Rail de glissement selon la revendication 1, caractérisé en ce que les dispositifs sont des assemblages à queue d'aronde (9, 10; 67).

3. Rail de glissement selon les revendications 1 et 2, caractérisé en ce qu'on prévoit, entre le corps de revêtement de glissement (5; 49) et le support (4; 50), deux assemblages à queue d'aronde s'étendant dans la direction d'avance des chaînes (B–B).

4. Rail de glissement selon les revendications 2 et 3, caractérisé en ce que le support présente au moins une zone terminale (17 ou 18) coudée, vers la direction d'avance des chaînes (B–B), autour de laquelle le corps de revêtement de glissement passe par des coudes (19, 20), les assemblages à queue d'aronde (9, 10) étant prévus entre le corps de glissement et la zone terminale (17 ou 18).

5. Rail de glissement selon la revendication 1, caractérisé en ce que le support (4; 50) présente, en coupe transversale, des brides transversales (21, 22; 52, 53, 54) espacées, entre lesquelles s'étend une entretoise (23; 55).

6. Rail de glissement selon la revendication 5, caractérisé en ce que l'entretoise (23; 55) est placée dans un plan médian longitudinal (D–D) du rail de glissement.

7. Rail de glissement selon les revendications 5 et 6, caractérisé en ce qu'on prévoit, à côté de l'entretoise (23; 55), des nervures transversales (24, 25) qui s'étendent entre les brides transversales (21, 22).

8. Rail de glissement selon la revendication 5, caractérisé en ce qu'une autre bride transversale (54) s'étend entre les brides transversales (52, 53).

9. Rail de glissement selon les revendications 5, 6 et 8, caractérisé en ce que les brides transversales (21, 22) sont soutenues par endroits, par des éléments à noeuds (26, 27), par rapport à l'entretoise (23).

10. Rail de glissement qui comporte un canal entourant les chaînes sur plusieurs côtés, selon les revendications 1 et 2, caractérisé en ce que le corps de revêtement de glissement (60) est noyé dans le support (59), les assemblages à queue d'aronde (67) s'étendant entre le support (59) et le corps de revêtement de glissement (60), transversalement à une direction longitudinale des chaînes.

11. Rail de glissement selon la revendication 10, caractérisé en ce que les assemblages à queue d'aronde (67) sont placés sur des ailes (68, 69) opposées du corps de revêtement de glissement (60) et du support (59).

12. Rail de glissement selon les revendications 10 et 11, caractérisé en ce que les assemblages à queue d'aronde (67) ne s'étendent que sur une zone partielle des ailes (68, 69) du corps de revêtement de glissement (60).

13. Rail de glissement selon la revendication 1 avec oeillets de palier qui coopèrent avec des axes de palier du moteur à combustion interne, caractérisé en ce que les oeillets de palier (30, 31) sont placés sur le support (4) et pourvus de dispositifs de fixation (36) qui s'engagent dans un évidement (40) des axes de palier (29).

14. Rail de glissement selon la revendication 13, caractérisé en ce que chaque dispositif de fixation (36) comporte des éléments de serrage (41, 42) formant ressort dans la direction radiale de chaque axe de palier (29), qui sont réalisés d'une pièce avec le support (4).

15. Rail de glissement selon la revendication 13, caractérisé en ce que les dispositifs de fixation (36) sont des boulons qui agissent dans la direction radiale de l'axe de palier (29) et qui pénètrent dans leur évidement (40), par une section sphérique (39).

16. Rail de glissement selon la revendication 3, caractérisé en ce que, vus dans la section transversale du rail de glissement (1, 42), des profilages (11, 12) passant les uns derrière les autres, du premier guidage à queue d'aronde (9), s'étendent à proximité d'un plan médian longitudinal (D–D) et des profilages (13, 14) du deuxième assemblage à queue d'aronde (10) s'étendent à proximité de zones de bordure (15, 16).

17. Rail de glissement selon la revendication 3, caractérisé en ce que, vus dans la section transversale du rail de guidage (1, 45), les assemblages à queue d'aronde (11, 12 et 13, 14) sont décalés l'un par rapport à l'autre (distance C).

18. Rail de glissement selon les revendications 10 et 11, caractérisé en ce que les assemblages à queue d'aronde (67) sont répartis à peu près uniformément sur la longueur du rail de guidage (56).

19. Procédé de fabrication du rail de glissement selon la revendication 1, caractérisé en ce que le support (4) est fabriqué tout d'abord par moulage par injection et le corps de revêtement de glissement (5) est ensuite réuni au support (4), par moulage par injection, pour former la totalité du rail de glissement (1).

20. Procédé de fabrication du rail de glissement selon la revendication 10, caractérisé en ce que les éléments du corps de revêtement (64, 65) sont tout d'abord fabriqués par moulage par injection puis réunis – encore par moulage par injection – aux éléments formant le support (59).

FIG.1

FIG.2

FIG.3

FIG.4

EP 0 279 934 B1

FIG.5

FIG.6

FIG.7

FIG.8

FIG.9

FIG.10